# EUROPEAN PATENT SPECIFICATION

(11) **EP 2 475 245 B1**
(45) Date of publication and mention of the grant of the patent: **15.05.2013**
(21) Application number: 10752559.4
(22) Date of filing: 06.09.2010
(51) Int. Cl.: A01K 27/00

(54) **REFLECTOR WITH FASTENING DEVICE FOR ANIMAL COLLARS**
REFLEKTOR MIT BEFESTIGUNGSVORRICHTUNG FÜR TIERHALSBÄNDER
RÉFLECTEUR AVEC DISPOSITIF DE FIXATION POUR COLLIERS D'ANIMAUX

(30) Priority: 11.09.2009 DE 102009029361
(43) Date of publication of application: 18.07.2012
(73) Proprietor: Bayer Intellectual Property GmbH, 40789 Monheim (DE)
(72) Inventor: MÜLLER, Uwe, 51373 Leverkusen (DE); VEHLING, Liska, F-74350 Cernex (FR); STEINER, Ingrid, 77871 Renchen (DE)
(74) Representative: BIP Patents
(86) International application number: PCT/EP2010/063016
(87) International publication number: WO 2011/029790

(56) References cited:
- DE-U1- 29 613 974
- GB-A- 1 505 011
- GB-A- 2 045 914

## Description

The invention relates to a reflector with a fastening device for animal collars and to animal collars which contain an active substance in combination with the reflector according to the invention.

Animal collars which contain active substances and have a reflective material over their full surface area are known, for example, from FR 2 594 001, BE 904 548, DE 3242741 A1, EP 0076038 B1. US 4,091,766 and US 2006/0144345 A1. A disadvantage of these is low concentration of the light beam and consequently weak reflection. The full-area reflective coating on collars from the prior art is not scratch-resistant and is degraded by chemical action or mechanical stress. Also known are animal collars which have one or more separate reflectors, for example JP 2000-14268, DE 2951066, DE 198606760 U, DE 1985348624 U. A disadvantage is that reflection in all directions is not ensured. Furthermore, it is not possible to rule out the chance that, during the use of collars containing an active substance, the reflectors described may impair release of the active substance. Known reflectors can be removed again from the collar. In cases where the reflectors are fastened in advance to collars containing an active substance, this entails the risk of contaminated reflectors becoming available and getting into the hands, or mouths, of children.

To increase human and animal safety, the object is to provide reflectors for an animal collar that do not have the disadvantages described above.

The object of the invention is achieved by a reflector with a fastening device for an animal collar including a base plate with an inner surface and an outer surface. A clip, which is substantially U-shaped, runs over the inner surface, the end of the first leg of the clip being fastened by means of a movable connection to a first side of the base plate, and the end of the second leg being suitable for being irreversibly fastened to a side of the base plate opposite from the first side. On the outer surface of the base plate there is/are one or more spacers.

A retroreflector is a mirror consisting of glass or transparent plastic on the rear side of which there are triple prisms. A triple prism comprises three non-reflective planar surfaces that are perpendicular to one another. The light impinging through the mirror is totally reflected at the triple prisms and returned virtually completely in the direction of the light source.

The use of triple prisms allows reflection back to the radiation source to take place largely independently of the alignment of the reflector. Furthermore, a more intensive reflection of the concentrated light beam is possible by the triple prisms than in the case of full-area coated reflector strips such as those described in the prior art.

With preference, the triple prisms are arranged in a frame which joins flush with the periphery of the base plate. The triple prisms are arranged along a reflector surface. The reflector surface is curved or segmented in a direction perpendicular to the path of the clip. The reflector surface runs over the outer surface of the base plate and has the greatest distance from the outer surface of the base plate in the middle with respect to the path perpendicular to the clip. With preference, the reflector surface comprises a middle part, which runs parallel to the base plate, and two side surfaces, which are symmetrical to each other, laterally join the middle part and taper at an angle of 60° from the connecting point to the base plate.

The triple prisms are made of thermoplastic material, such as for example polycarbonate, polymethyl methacrylate, polypropylene or polyamide, and are therefore scratch-resistant and resistant to chemical action and mechanical loading.

The object of the invention is also achieved by an animal collar containing an active substance which can leave the animal collar over the entire length. With preference, the active substance is an insecticide, with particular preference an agent against fleas or ticks. With preference, the collar consists of plastic with an embedded active substance which is released by motion; with particular preference, the plastic is PVC. At least one, with preference three, with particular preference four, of the reflectors according to the invention is/are fastened to the collar.

If three reflectors are fastened, they are spaced apart from one another when the collar is closed with preference in the range from 100 to 140 degrees, with particular preference in the range from 118 to 122 degrees. If four reflectors are fastened, they are spaced apart when the collar is closed with preference in the range from 80 to 100 degrees, with particular preference in the range from 88 to 92 degrees.

The reflectors are non-reversibly fastened to the collar.

The spacers on the inner side of the base area allow the active substance to diffuse out of the collar unhindered. With preference, the spacers are configured in such a way that they prevent the reflector from slipping on the collar, for example as nubs.

The object of the invention is also achieved by a system comprising a collar described above containing an active substance which can leave the collar over the entire length and, with preference, is an insecticide, with particular preference an agent against fleas or ticks, and at least one, with preference three, with particular preference four, of the reflectors according to the invention.

The reflector according to the invention is provided with retroreflective properties and can be fastened to a collar containing an active substance without the effectiveness of the animal collar containing an active substance being significantly impaired. Reflection in all directions from the collar is obtained, without the entire collar being coated with reflective materials over its full surface area, as a result of the triple prisms, and in particular when 3 or 4 of the reflectors according to the invention are used. Consequently, the safety of animals that wear such an animal collar, in particular in road traffic, is significantly increased. The possibility of non-reversible fastening of the reflector to the animal collar containing an active substance prevents reflectors that are possibly contaminated with active substance from becoming available and, for example, getting into the hands, or mouths, of children.

### Figures and examples

The figures show
- Figure 1: shows an exploded drawing with the individual components of the reflector
- Figure 2: shows the reflector in the closed state
- Figure 3: shows the reflector in the not yet closed state
- Figure 4: shows a side view of the mounted reflector
- Figure 5: shows a collar with reflectors mounted on it
- Figures 6 and 6a: show a section through the reflector in the region of the closure chamber
- Figure 7: shows a further side view of the reflector.

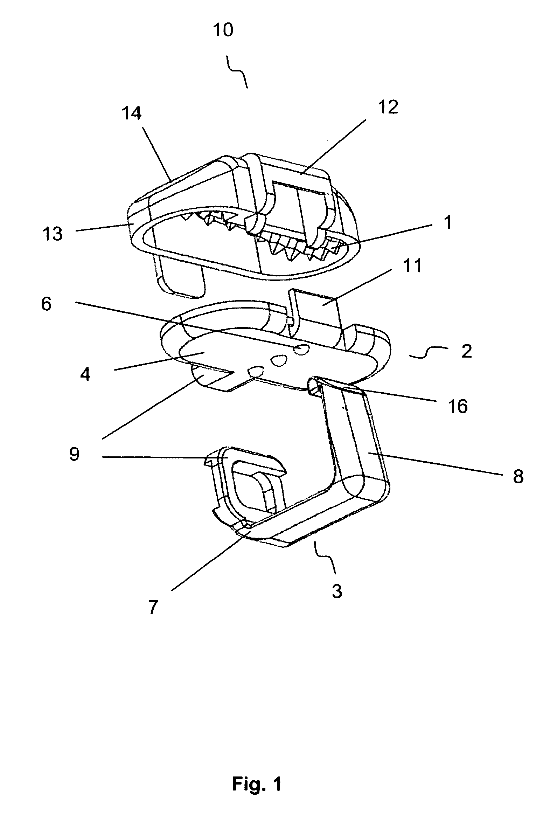

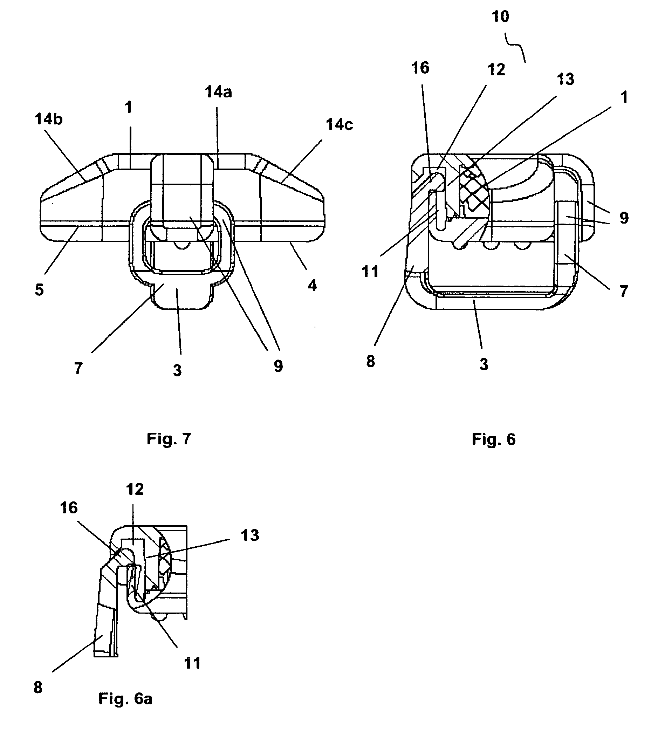

Figure 1 shows an exploded drawing with the individual components of the reflector 10. The reflector 10 is made up of a base plate 2 with an inner surface 4 and an outer surface 5 (see figure 7) and a clip 3, which is substantially U-shaped and runs over the inner surface 4. On the outer surface 5 of the base plate 2 there are triple prisms. The triple prisms 1 are arranged in a frame 13, which joins flush with the periphery of the base plate 2. The triple prisms 1 form a planar reflector surface 14 with their smooth side. On the surface 4 of the base plate 2 there is/are one or more nubs 6.

The end of the first leg 7 of the clip 3 is fastened by means of a movable connection 9 to a first side of the base plate 2. In the example shown, the movable connection comprises two loops engaging one in the other. The end of the second leg 8 is suitable for being irreversibly fastened to a side of the base plate 2 opposite from the first side. The end of the second leg 8 has a closure hook 16. By interaction of the closure hook 16 with the shackle 11 fastened to the base plate 2 and the closure chamber 12 fastened to the frame 13, the leg 8 is irreversibly fastened to the base plate 2 when closure takes place.

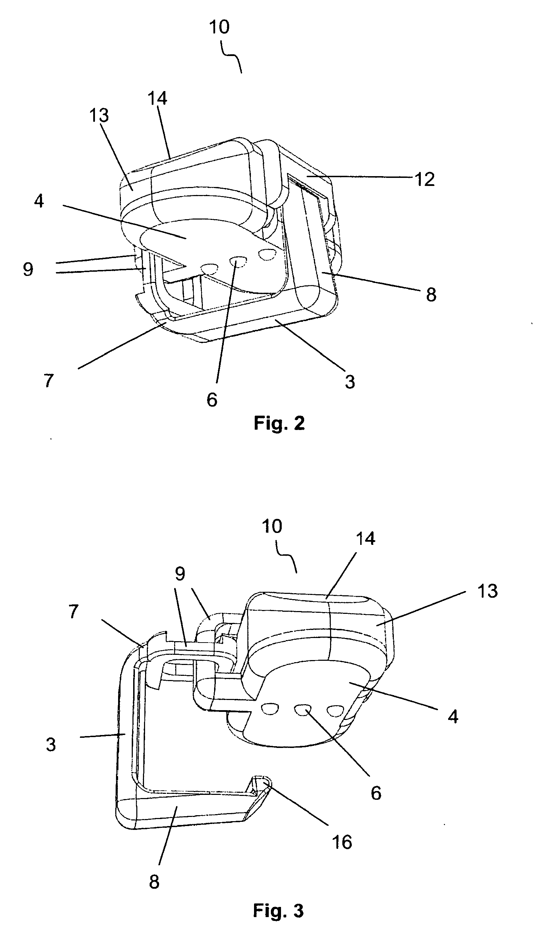

Figure 2 shows the reflector 10 in the closed state. The closure hook 16 cannot be seen, since it is hooked with the shackle 11 inside the closure chamber 12.

Figure 3 shows the reflector in the not yet closed state. The two loops, on the frame 13 and at the end of the leg 7 of the clip 3, engage one in the other and form the movable connection 9.

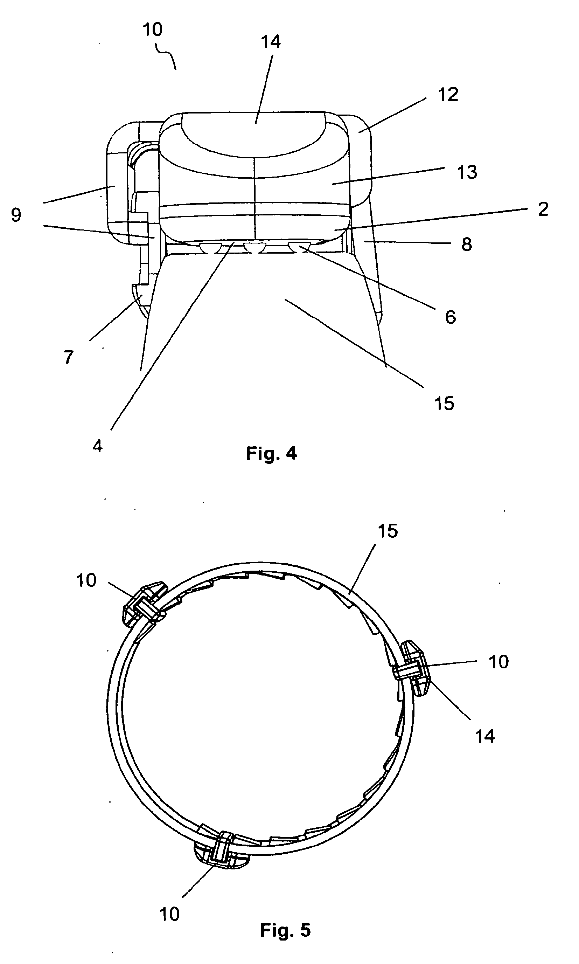

Figure 4 shows a reflector 10, which is mounted on a collar 15. The nubs 6 bring about a distance between the inner side 4 of the base plate 2 and the collar 15 and at the same time prevent the reflector 10 from slipping on the collar 15. In the case of a collar 15 containing an active substance, the distance between the base plate 2 and the collar 15 also allows active substance to be released unhindered from the collar 15 in this direction.

Figure 5 shows a closed collar 15 with three reflectors 10 mounted on it. The three reflectors 10 are respectively mounted spaced apart 120 degrees, in order to ensure reflection of light from all possible directions.

Figures 6 and 6a show a section through the reflector in the region of the closure chamber. When closure takes place, the closure hook 16 is inserted into the closure chamber 12 by pressing of the leg 8. The shackle 11 is in this case pressed inwards with respect to the frame 13 until the closure hook 16 has overcome the end of the shackle 11. The shackle 11 returns to its starting position under the closure hook 16. The closure hook 16 then cannot be opened again, since the shackle 11 prevents the closure hook 16 from moving downwards out of the closure chamber 12. The bevelled guide of the closure chamber 12 prevents the closure hook 16 from moving horizontally.

Figure 7 shows the reflector from one side. The base plate 2 has nubs 6 on its inner side 4 and the frame 13 on its outer side 5. The triple prisms 1 are arranged in the frame 13, which joins flush with the periphery of the base plate 2. The triple prisms 1 form a planar reflector surface 14 with their smooth side. The reflector surface is segmented in a direction perpendicular to the path of the clip 3. The reflector surface 14 runs over the outer surface of the base plate 5 and has the greatest distance from the outer surface 5 of the base plate 2 in the middle with respect to the path perpendicular to the clip 3. The segmented reflector surface 14 comprises a middle part 14a, which runs parallel to the base plate 3, as well as two side surfaces 14b, 14c, which are symmetrical to each other, laterally join the middle part 14a and taper at an angle of 60° from the connecting point to the base plate 2.

## Claims

1. Reflector (10) with a fastening device for an animal collar (15) including
a base plate (2) with an inner surface (4) and an outer surface (5) with one or more spacers (6) on the inner surface (4) and triple prisms (1) on the outer surface;
a clip (3), which is substantially U-shaped and runs over the inner surface (4), the end of the first leg (7) of the clip (3) being fastened by means of a movable connection (9) to a first side of the base plate (2), and the end of the second leg (8) of the clip (3) being suitable for being irreversibly fastened to a side of the base plate (2) opposite from the first side.

2. Reflector (10) according to Claim 1, **characterized in that** the triple prisms (1) are arranged in a frame (13) which joins flush with the periphery of the base plate (2) and along a reflective surface (14).

3. Reflector (10) according to Claim 2, **characterized in that** the reflector surface (14) is curved or segmented in a direction perpendicular to the path of the clip (3) and the reflector surface (14) has the greatest distance from the outer surface (5) of the base plate (2) in the middle with respect to the path perpendicular to the clip (3).

4. Reflector (10) according to Claim 3, **characterized in that** the reflector surface (14) has a middle part (14a), which runs parallel to the base plate (2), and two side surfaces (14b, 14c), which are symmetrical to each other, laterally join the middle part (14a) and taper at an angle of 60° from the connecting point to the base plate (2).

5. Reflector (10) according to one of Claims 1 to 4, **characterized in that** the triple prisms (1) are made of thermoplastic material, with preference of polycarbonate, polymethyl methacrylate, polypropylene or polyamide.

6. Reflector (10) according to one of Claims 1 to 5, **characterized in that** the spacers (6) are nubs.

7. Reflector (10) according to one of Claims 1 to 6, **characterized in that** the movable connection (9) comprises two loops, one engaging in the other.

8. Reflector (10) according to one of Claims 2 to 7, **characterized in that** the second leg (8) of the clip (3) is suitable for being irreversibly fastened to the base plate (2) by interaction of a closure hook (16) arranged at the end of the second leg (8) with a shackle (11) fastened to the base plate (2) and a closure chamber (12) fastened to the frame (13).

9. Animal collar (15) containing an active substance which can leave the collar (15) over the entire length, at least one, with preference three, with particular preference four, of the reflectors (10) according to Claims 1 to 8 being fastened to the collar (15).

10. Animal collar (15) according to Claim 9, **characterized in that** three reflectors (10) are fastened to the animal collar (15), spaced apart from one another when the animal collar (15) is closed in the range from 100 to 140 degrees, with particular preference in the range from 118 to 122 degrees.

11. Animal collar (15) according to Claim 9, **characterized in that** four reflectors (10) are fastened to the animal collar (15), spaced apart from one another when the animal collar (15) is closed in the range from 80 to 100 degrees, with particular preference in the range from 88 to 92 degrees.

12. Animal collar (15) according to one of Claims 9 to 11, **characterized in that** the animal collar (15) consists of plastic in which there is embedded an active substance which is released by motion.

13. Animal collar (15) according to Claim 12, **characterized in that** the plastic is PVC.

14. System comprising an animal collar (15) containing an active substance which can leave the animal collar (15) over the entire length, and at least one, with preference three, with particular preference four, of the reflectors (10) according to Claims 1 to 8.

15. System according to Claim 14, **characterized in that** the animal collar (15) consists of plastic in which there is embedded active substance which is released by motion.

16. System according to Claim 15, **characterized in that** the plastic is PVC.

## Patentansprüche

1. Reflektor (10) mit Befestigungsvorrichtung für ein Tierhalsband (15) enthaltend
eine Grundplatte (2) mit Innenfläche (4) und Außenfläche (5), wobei sich an der Innenfläche (4) ein oder mehrere Abstandshalter (6) und an der Außenfläche Tripelprismen (1) befinden;
einen Bügel (3), der im Wesentlichen U-förmig ist und über der Innenfläche (4) verläuft, wobei das Ende des ersten Schenkels (7) des Bügels (3) über eine bewegliche Verbindung (9) an einer ersten Seite der Grundplatte (2) befestigt ist, und das Ende des zweiten Schenkels (8) des Bügels (3) geeignet ist, irreversibel an einer der ersten Seite gegenüberliegenden Seite der Grundplatte (2) befestigt zu werden.

2. Reflektor (10) nach Anspruch 1, **dadurch gekennzeichnet, dass** die Tripelprismen (1) in einem Rahmen (13), der bündig an den Umfang der Grundplatte (2) anschließt, und entlang einer Reflektorfläche (14) angeordnet sind.

3. Reflektor (10) nach Anspruch 2, **dadurch gekennzeichnet, dass** die Reflektorfläche (14) in einer Richtung senkrecht zum Verlauf des Bügels (3) gekrümmt oder segmentiert ist und die Reflektorfläche (14) in der Mitte in Bezug auf den Verlauf senkrecht zum Bügel (3) den größten Abstand von der Außenfläche (5) der Grundplatte (2) hat.

4. Reflektor (10) nach Anspruch 3, **dadurch gekennzeichnet, dass** die Reflektorfläche (14) einen Mittelteil (14a) aufweist, der parallel zur Grundplatte (2) verläuft, sowie zwei zueinander symmetrische Seitenflächen (14b, 14c), die seitlich an das Mittelteil (14a) anschließen und von der Anschlussstelle unter einem Winkel von 60° auf die Grundplatte (2) zulaufen.

5. Reflektor (10) nach einem der Ansprüche 1 bis 4, **dadurch gekennzeichnet, dass** die Tripelprismen (1) aus thermoplastischem Kunststoff, bevorzugt aus Polycarbonat, Polymethylmethacrylat, Polypropylen oder Polyamid sind.

6. Reflektor (10) nach einem der Ansprüche 1 bis 5, **dadurch gekennzeichnet, dass** die Abstandshalter (6) Noppen sind.

7. Reflektor (10) nach einem der Ansprüche 1 bis 6, **dadurch gekennzeichnet, dass** die bewegliche Verbindung (9) aus zwei ineinander greifenden Ösen besteht.

8. Reflektor (10) nach einem der Ansprüche 2 bis 7, **dadurch gekennzeichnet, dass** der zweite Schenkel (8) des Bügels (3) geeignet ist, durch Zusammenwirken eines am Ende des zweiten Schenkels (8) angeordneten Verschlusshakens (16) mit einer an der Grundplatte (2) befestigten Federlasche (11) und einer am Rahmen (13) befestigten Verschlusskammer (12) irreversibel an der Grundplatte (2) befestigt zu werden.

9. Tierhalsband (15) enthaltend einen Wirkstoff, der über die gesamte Länge aus dem Halsband (15) austreten kann, wobei an dem Halsband (15) mindestens einer, bevorzugt drei, besonders bevorzugt vier der Reflektoren (10) nach Anspruch 1 bis 8 befestigt sind.

10. Tierhalsband (15) nach Anspruch 9, **dadurch gekennzeichnet, dass** drei Reflektoren (10) am Tierhalsband (15) befestigt sind, die bei geschlossenem Tierhalsband (15) einen Abstand voneinander im Bereich von 100 und 140 Grad, besonders bevorzugt im Bereich von 118 bis 122 Grad haben.

11. Tierhalsband (15) nach Anspruch 9, **dadurch gekennzeichnet, dass** vier Reflektoren (10) am Tierhalsband (15) befestigt sind, die bei geschlossenem Tierhalsband (15) einen Abstand im Bereich von 80 bis 100 Grad, besonders bevorzugt im Bereich von 88 bis 92 Grad haben.

12. Tierhalsband (15) nach einem der Ansprüche 9 bis 11, **dadurch gekennzeichnet, dass** das Tierhalsband (15) aus Kunststoff besteht, in den ein Wirkstoff eingebettet ist, der durch Bewegung freigesetzt wird.

13. Tierhalsband (15) nach Anspruch 12, **dadurch gekennzeichnet, dass** der Kunststoff PVC ist.

14. System aus einem Tierhalsband (15) enthaltend einen Wirkstoff, der über die gesamte Länge aus dem Tierhalsband (15) austreten kann, und mindestens einen, bevorzugt drei, besonders bevorzugt vier der Reflektoren (10) nach Anspruch 1 bis 8.

15. System nach Anspruch 14, **dadurch gekennzeichnet, dass** das Tierhalsband (15) aus Kunststoff besteht, in den ein Wirkstoff eingebettet ist, der durch Bewegung freigesetzt wird.

16. System nach Anspruch 15, **dadurch gekennzeichnet, dass** der Kunststoff PVC ist.

## Revendications

1. Réflecteur (10) avec dispositif de fixation pour un collier d'animal (15), comportant
une plaque de base (2) avec une surface interne (4) et une surface externe (5) avec un ou plusieurs éléments d'espacement (6) sur la surface interne (4) et des triples prismes (1) sur la surface externe ;
une pince (3) substantiellement en forme de U et s'étendant sur la surface interne (4), l'extrémité de la première branche (7) de la pince (3) étant attachée au moyen d'une connexion mobile (9) à un premier côté de la plaque de base (2), et l'extrémité de la deuxième branche (8) de la pince (3) étant adaptée pour être attachée de manière irréversible à un côté de la plaque de base (2) opposé au premier côté.

2. Réflecteur (10) selon la revendication 1, **caractérisé en ce que** les triples prismes (1) sont agencés dans un cadre (13) qui se raccorde en affleurement avec la périphérie de la plaque de base (2) et le long d'une surface réfléchissante (14).

3. Réflecteur (10) selon la revendication 2, **caractérisé en ce que** la surface réfléchissante (14) est courbe ou segmentée dans une direction perpendiculaire au chemin de la pince (3) et la surface réfléchissante (14) présente la plus grande distance à la surface externe (5) de la plaque de base (2) au milieu par rapport au chemin perpendiculaire à la pince (3).

4. Réflecteur (10) selon la revendication 3, **caractérisé en ce que** la surface réfléchissante (14) a une partie centrale (14a), qui s'étend parallèlement à la plaque de base (2), et deux surfaces latérales (14b, 14c) qui sont symétriques l'une par rapport à l'autre, qui se réunissent latéralement à la partie centrale (14a) et qui s'effilent suivant un angle de 60° depuis le point de liaison à la plaque de base (2).

5. Réflecteur (10) selon l'une quelconque des revendications 1 à 4, **caractérisé en ce que** les triples prismes (1) sont fabriqués en matériau thermoplastique, de préférence en polycarbonate, en polyméthylméthacrylate, en polypropylène ou en polyamide.

6. Réflecteur (10) selon l'une quelconque des revendications 1 à 5, **caractérisé en ce que** les éléments d'espacement (6) sont des picots.

7. Réflecteur (10) selon l'une quelconque des revendications 1 à 6, **caractérisé en ce que** la connexion mobile (9) comprend deux boucles, l'une s'engageant dans l'autre.

8. Réflecteur (10) selon l'une quelconque des revendications 2 à 7, **caractérisé en ce que** la deuxième branche (8) de la pince (3) est adaptée pour être attachée de manière irréversible à la plaque de base (2) par interaction entre un crochet de fermeture (16) disposé à l'extrémité de la deuxième branche (8) et une manille (11) attachée à la plaque de base (2) et une chambre de fermeture (12) attachée au cadre (13).

9. Collier d'animal (15) contenant une substance active qui peut quitter le collier (15) sur toute sa longueur, au moins un, de préférence trois, particulièrement préférablement quatre, des réflecteurs (10) selon l'une quelconque des revendications 1 à 8 étant attaché(s) au collier (15) .

10. Collier d'animal (15) selon la revendication 9, **caractérisé en ce que** trois réflecteurs (10) sont attachés au collier d'animal (15), espacés les uns des autres lorsque le collier d'animal (15) est fermé suivant une plage de 100 à 140 degrés, particulièrement préférablement suivant une plage de 118 à 122 degrés.

11. Collier d'animal (15) selon la revendication 9, **caractérisé en ce que** quatre réflecteurs (10) sont attachés au collier d'animal (15), espacés l'un de l'autre lorsque le collier d'animal (15) est fermé suivant une plage de 80 à 100 degrés, particulièrement préférablement suivant une plage de 88 à 92 degrés.

12. Collier d'animal (15) selon l'une quelconque des revendications 9 à 11, **caractérisé en ce que** le collier d'animal (15) est constitué de plastique dans lequel est incorporée une substance active qui est libérée sous l'effet du mouvement.

13. Collier d'animal (15) selon la revendication 12, **caractérisé en ce que** le plastique est du PVC.

14. Système comprenant un collier d'animal (15) contenant une substance active qui peut quitter le collier d'animal (15) sur toute sa longueur, et au moins un, de préférence trois, particulièrement préférablement quatre des réflecteurs (10) selon l'une quelconque des revendications 1 à 8.

15. Système selon la revendication 14, **caractérisé en ce que** le collier d'animal (15) est constitué de plastique dans lequel est incorporée une substance active qui est libérée sous l'effet du mouvement.

16. Système selon la revendication 15, **caractérisé en ce que** le plastique est du PVC.
